# EUROPÄISCHE PATENTSCHRIFT

(11) **EP 2 408 638 B1**
(45) Veröffentlichungstag und Bekanntmachung des Hinweises auf die Patenterteilung: **23.01.2013**
(21) Anmeldenummer: 10710778.1
(22) Anmeldetag: 18.02.2010
(51) Int. Cl.: B60K 35/00, G01D 7/08, G01P 1/08, G02F 1/167, G09G 3/34

(54) **ANZEIGEINSTRUMENT**
DISPLAY DEVICE
INSTRUMENT INDICATEUR

(30) Priorität: 20.03.2009 DE 102009014167; 15.10.2009 DE 102009049632
(43) Veröffentlichungstag der Anmeldung: 25.01.2012
(73) Patentinhaber: Johnson Controls GmbH, 51399 Burscheid (DE)
(72) Erfinder: SÜSS, Manfred, 75196 Remchingen (DE); MEHL, Nicolas, F-67400 Illkirchen-Graffensatden (FR); HOFFMAN, Isabel, 75045 Walzbachtal (DE); LUDEWIG, Bernd, 69469 Weinheim (DE)
(74) Vertreter: Schwöbel, Thilo K.
(86) Internationale Anmeldenummer: PCT/EP2010/001025
(87) Internationale Veröffentlichungsnummer: WO 2010/105725

(56) Entgegenhaltungen:
- EP-A1- 1 724 556
- WO-A1-03/016830
- DE-A1- 3 028 867
- JP-A- 2008 094 361
- KR-B1- 100 909 711

## Beschreibung

Die Erfindung betrifft ein Anzeigeinstrument, insbesondere zur Verwendung im automobilen Bereich.

### Stand der Technik

Kraftfahrzeug-Anzeigeinstrumente sind in zahlreichen Konstruktionsvarianten bekannt. Es ist ferner bekannt, elektronische Tinte, (im Englischen gelegentlich als "E-Ink = E-Tinte" bezeichnet) in eine Folie zur Integration in elektronische Anzeigen bzw. elektronische Displays einzuarbeiten. Die Hauptbestandteile von elektronischer Tinte bestehen in zahlreichen winzigen Mikrokapseln.

Gemäß einer Produktvariante elektronischer Tinte enthält jede Mikrokapsel positiv geladene weiße Partikel und negativ geladene schwarze Partikel, die in einer klaren Flüssigkeit suspendiert sind. Unter dem Einfluss eines elektrischen Feldes wandern die weißen Partikel zu einem ersten Polbereich der jeweiligen Mikrokapsel, wo sie für einen Betrachter sichtbar werden, und folglich die Oberfläche der Mikrokapsel im ersten Polbereich als weißer Fleck erscheint. Gleichzeitig wandern unter dem Einfluss eines entgegengesetzten elektrischen Feldes schwarze. Partikel zu ziem ersten Polbereich gegenüberliegenden zweiten Polbereich, wo sie versteckt sind. Durch eine Umkehr des elektrischen Feldes des zuvor beschriebenen Vorgangs treten die schwarzen Partikel im ersten Polbereich in Erscheinung, was bewirkt, dass die Oberfläche der Mikrokapsel im ersten Polbereich dunkel erscheint.

Um ein elektronisches E-Tinten-Display herzustellen, wird die elektronische Tinte auf ein Kunststoff Folienblatt gedruckt, das auf einer Schaltungsschicht laminiert wird. Die Schaltung bildet ein Muster von Pixeln, das durch einen Displaytreiber angesteuert wird. Die zuvor beschriebenen Mikrokapseln sind in einem flüssigen Trägermedium suspendiert und können unter Verwendung bekannter Druckverfahren auf nahezu alle denkbaren Oberflächen, wie zum Beispiel auf Oberflächen aus Glas, Gewebe, Papier oder Kunststoff gedruckt werden.

Ein E-Tinten-Display mit den Merkmalen des Oberbegriffs des Anspruchs 1 zeigt die JP-A-2008 094 361.

### Darstellung der Erfindung

Eine Aufgabe der Erfindung ist es, eine Kraftfahrzeug-Anzeigevorrichtung bzw. eine Anzeigeeinrichtung zu schaffen, die es ermöglicht, in einfacher Weise und mit möglichst geringem Stromverbrauch eine möglichst große Darstellungsvielfalt von Informationen zu realisieren und darüberhinaus in einfacher und robuster Weise hergestellt werden kann.

Die Aufgabe wird gelöst durch eine Anzeigeeinrichtung für ein Kraftfahrzeug, wobei die Anzeigeeinrichtung einen ersten Anzeigebereich und einen zweiten Anzeigebereich aufweist, wobei der erste Anzeigebereich mittels einer ersten Anzeige im Zentralbereich eines Ziffernblattes vorgesehen ist und wobei der zweite Anzeigebereich zur stromlosen Anzeige einer Anzeigeinformation ausgebildet ist.

Ein wesentlicher Aspekt der Erfindung besteht darin, dass ein Anzeigeinstrument wenigstens teilweise aus elektronischem Papier (kurz als "E-Papier" bezeichnet) ausgebildet ist. Es ist daher vorgesehen, dass im zweiten Anzeigebereich eine zweite Anzeige mit elektronischer Tinte vorgesehen ist. Es ist hierdurch in einfacher Weise möglich, die zweite Anzeige mit einem hohen Kontrast und gleichzeitig mit einem geringen Energieverbrauch zu betreiben.

Erfindungsgemäß ist auch, dass die erste Anzeige in einer ersten Haupterstreckungsebene vorgesehen ist, dass die zweite Anzeige in einer zweiten Haupterstreckungsebene vorgesehen ist und dass die zweite Haupterstreckungsebene gegenüber der ersten Haupterstreckungsebene näher beim Betrachter der Anzeigevorrichtung angeordnet ist. Hierdurch ist es erfindungsgemäß in einfacher und kostengünstiger Weise möglich, dass der erste und zweite Anzeigebereich in unterschiedlichen Ebenen angeordnet sind und dennoch keine mechanisch aufwändigen Maßnahmen wie etwa das Durchbohren einer mittig angeordneten Anzeige (erste Anzeige) vorzusehen.

Erfindungsgemäß ist es ferner auch bevorzugt, dass die zweite Anzeige die erste Anzeige zumindest teilweise entlang eines Umfangs des Zifferblattes umgreifend ausgebildet ist. Durch eine solche zumindest teilweise Umgreifung bzw. Umfassung des ersten Anzeigebereichs durch den zweiten Anzeigebereich ist es erfindungsgemäß möglich, den Gesamtanzeigebereich der Anzeigeeinrichtung bzw. des Zifferblattes in ästhetisch ansprechender Weise zu gestalten.

Besonders bevorzugt ist es erfindungsgemäß ferner, wenn die zweite Anzeige zur Darstellung eines Zeigers vorgesehen ist. Hierdurch kann eine Zeigerinformation in einfacher Weise und mit hohem Kontrast trotz geringem Energieverbrauch angezeigt werden. Nachfolgend wird eine rein beispielhaft aufzufassende Ausführungsform der Erfindung unter Bezugnahme auf die einzige beigefügte Zeichnung beschrieben.

### Kurze Beschreibung der Figuren

**Figur 1** zeigt in schematischer Darstellung eine Aufsicht auf ein erfindungsgemäß ausgestaltetes Kraftfahrzeug-Anzeigeinstrument bzw. eine erfindungsgemäße Anzeigeeinrichtung.
**Figur 2** zeigt schematisch eine Seitendarstellung zur Veranschaulichung unterschiedlicher Haupterstreckungsebenen der Komponenten der Anzeigeeinrichtung.

### Figurenbeschreibung

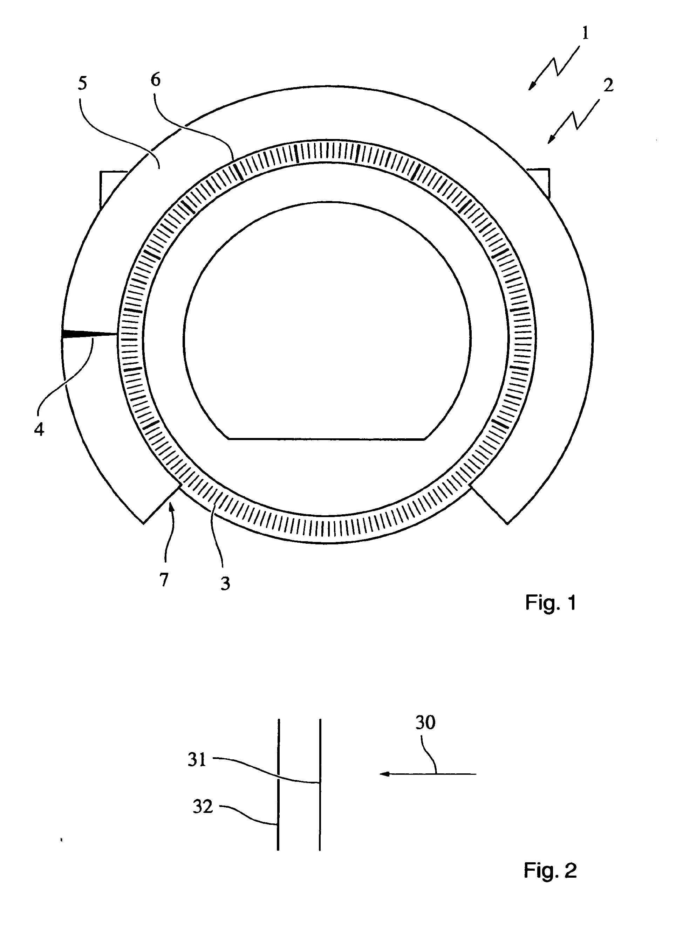

In Figur 1 ist in schematischer Darstellung eine Aufsicht auf eine erfindungsgemäße Anzeigeeinrichtung 1 dargestellt. Die Anzeigeeinrichtung 1 arbeitet vorzugsweise analog bzw. weist zumindest eine analoge Anmutung dahingehend auf, dass wesentliche Teile in der Art einer anlogen Zeigeranordnung vorgesehen sind. Die Anzeigeeinrichtung 1 weist ein im Beispiel rundes Zifferblatt 2 auf. Das Zifferblatt 2 weist ein Zentrum auf und außerhalb des Zentrums (bzw. radial außenliegend bzw. randseitig) weist das Zifferblatt eine Skala 3 für die anzuzeigende Messgröße (etwa der Fahrzeuggeschwindigkeit) auf. Ferner weist die Anzeigeeinrichtung 1 einen Zeiger 4, der abhängig vom gegenwärtigen Wert der Messgröße auf eine entsprechende Stelle der Skala 3 zeigt.

Der Zeiger 4 erstreckt sich beispielsweise in radialer Richtung spitz zulaufend von einem den Anzeigebereich des Anzeigeinstrumentes 1 begrenzenden kreisbogenförmigen Umfassungsrand 5 einwärts zu einem die Skala 3 radial nach außen begrenzendem Umfangskreis 6.

Innerhalb der Skala 3 (bzw. in Richtung zum zentralen Bereich der Anzeigeeinrichtung 1) weist die Anzeigeeinrichtung 1 einen ersten Anzeigebereich 11 auf. Im ersten Anzeigebereich 11 ist eine erste Anzeige 21 zur Darstellung von Informationen vorgesehen. Die erste Anzeige 21 weist eine erste Haupterstreckungsebene 31 auf, die in der Figur 2 schematisch (in einer Seitendarstellung) dargestellt ist.

Außerhalb des ersten Anzeigebereichs 11 bzw. außerhalb der Skala 3 (d.h. allgemein radial außerhalb bezogen auf den zentralen Bereich der Anzeigeeinrichtung 1) ist weist die Anzeigeeinrichtung 1 einen zweiten Anzeigebereich 12 auf. Im zweiten Anzeigebereich 12 ist eine zweite Anzeige 22 zur Darstellung von Informationen vorgesehen. Die zweite Anzeige 22 weist eine zweite Haupterstreckungsebene 32 auf, die ebenfalls in der Figur 2 schematisch (in einer Seitendarstellung) dargestellt ist. Die zweite Haupterstreckungsebene 32 ist dabei in Richtung eines Betrachters bzw. in Bezug auf die Betrachtungsrichtung 30 der Anzeigeeinrichtung 1 gegenüber der ersten Haupterstreckungsebene verschoben vorgesehen.

Erfindungsgemäß wird der Zeiger 4 bzw. die Information des zweiten Anzeigebereichs 12 bzw. der zweiten Anzeige 22 auf einer flachen E-Papier-Anzeigevorrichtung 7 dargestellt, die über dem Zifferblatt 2 und dem Display, das heißt auf der dem Betrachter zugewandten Seite des Zifferblattes 2, angeordnet ist.

Hinsichtlich des technischen Grundlagenwissens zu E-Papier-Anzeigevorrichtungen wird auf die oben unter dem Kapitel "Stand der Technik" beschriebenen Ausführungen verwiesen.

Der Zeiger 4 bzw. die auf dem zweiten Anzeigebereich 12 bzw. der zweiten Anzeige 22 angezeigte Information bleibt auch ohne elektrischen Strom sichtbar, kann also in einem gewissen Sinne als statisch angesehen werden.

Der Zeiger 4 erscheint beispielsweise in schwarz auf weißem Untergrund oder in weiß auf schwarzen Untergrund. Bei einer entsprechenden Ausgestaltung des zweiten Anzeigebereichs 12 kann auch eine andere Farbgebung realisiert werden.

### Bezugszeichenliste

- 1: Anzeigeeinrichtung / Kraftfahrzeug-Anzeigeinstrument
- 2: Zifferblatt
- 3: Skala
- 4: Zeiger
- 5: Umfassungsrand
- 6: Umfangskreis
- 7: E-Papier-Anzeigevorrichtung
- 11: erster Anzeigebereich
- 12: zweite Anzeigebereich
- 21: erste Anzeige
- 22: zweite Anzeige
- 30: Betrachtungsrichtung
- 31: erste Haupterstreckungsebene
- 32: zweite Haupterstreckungsebene

## Patentansprüche

1. Anzeigeeinrichtung (1) für ein Kraftfahrzeug, wobei die Anzeigeeinrichtung (1) einen ersten Anzeigebereich (11) und einen zweiten Anzeigebereich (12) aufweist, wobei der erste Anzeigebereich (11) mittels einer ersten Anzeige (21) im Zentralbereich eines Ziffernblattes (2) vorgesehen ist, wobei der zweite Anzeigebereich (12) zur stromlosen Anzeige einer Anzeigeinformation ausgebildet ist, wobei im zweiten Anzeigebereich (12) eine zweite Anzeige (22) mit elektronischer Tinte vorgesehen ist und wobei die erste Anzeige (21) in einer ersten Haupterstreckungsebene (31) vorgesehen ist, **dadurch gekennzeichnet, dass** die zweite Anzeige (22) in einer zweiten Haupterstreckungsebene (32) vorgesehen ist und die zweite Haupterstreckungsebene (32) gegenüber der ersten Haupterstreckungsebene (31) näher beim Betrachter der Anzeigevorrichtung (1) angeordnet ist.

2. Anzeigevorrichtung (1) nach Anspruch 1, **dadurch gekennzeichnet, dass** die zweite Anzeige (22) die erste Anzeige (21) zumindest teilweise entlang eines Umfangs des Zifferblattes (2) umgreifend ausgebildet ist.

3. Anzeigevorrichtung (1) nach einem der vorhergehenden Ansprüche, **dadurch gekennzeichnet, dass** die zweite Anzeige (22) zur Darstellung eines Zeigers vorgesehen ist.

## Claims

1. Display device (1) for a motor vehicle, the display device (1) having a first display area (11) and a second display area (12), the first display area (11) being provided by means of a first display (21) in the central area of a dial (2), the second display area (12) being designed for the de-energized display of an item of display information, a second display (22) with electronic ink being provided in the second display area (12), and the first display (21) being provided in a first main plane of extent (31), **characterized in that** the second display (22) is provided in a second main plane of extent (32), and the second main plane of extent (32) is arranged closer to the viewer of the display device (1) than the first main plane of extent (31).

2. Display device (1) according to Claim 1, **characterized in that** the second display (22) is designed in a fashion embracing the first display (21) at least partially along a periphery of the dial (2).

3. Display device (1) according to one of the preceding claims, **characterized in that** the second display (22) is provided for displaying a pointer.

## Revendications

1. Instrument indicateur (1) pour un véhicule automobile, dans lequel l'instrument indicateur (1) présente une première région d'indication (11) et une deuxième région d'indication (12), dans lequel la première région d'indication (11) est prévue au moyen d'un premier indicateur (21) dans la région centrale d'un cadran (2), dans lequel la deuxième région d'indication (12) est réalisée pour indiquer sans alimentation électrique une information d'indication, dans lequel, dans la deuxième région d'indication (12) est prévu un deuxième indicateur (22) avec une encre électronique et dans lequel le premier indicateur (21) est prévu dans un premier plan d'étendue principale (31), **caractérisé en ce que** le deuxième indicateur (22) est prévu dans un deuxième plan d'étendue principale (32) et le deuxième plan d'étendue principale (32) est disposé plus près de l'observateur de l'instrument indicateur (1) que le premier plan d'étendue principale (31).

2. Instrument indicateur (1) selon la revendication 1, **caractérisé en ce que** le deuxième indicateur (22) est réalisé de manière à venir en prise autour du premier indicateur (21) au moins en partie le long d'une périphérie du cadran (2).

3. Instrument indicateur (1) selon l'une quelconque des revendications précédentes, **caractérisé en ce que** le deuxième indicateur (22) est prévu pour constituer un pointeur.
